# EUROPÄISCHE PATENTANMELDUNG

(11) **EP 4 542 801 A2**
(43) Veröffentlichungstag der Anmeldung: **23.04.2025**
(21) Anmeldenummer: 25163005.9
(22) Anmeldetag: 22.01.2020
(51) Int. Cl.: H02G 3/22

(54) **KABELDURCHFÜHRUNG ZUM DURCHFÜHREN VON KABEL DURCH EIN TRENNELEMENT UND ANORDNUNG**

(30) Priorität: 23.01.2019 DE 202019100362 U
(62) Teilanmeldung aus: 20703380.4
(71) Anmelder: CONTA-CLIP Verbindungstechnik GmbH, 33161 Hövelhof (DE)
(72) Erfinder: NOWASTOWSKI-STOCK, Jörg, Detmold (DE); LUDOLPH, Frank, Geseke (DE)
(74) Vertreter: Bittner, Thomas L.

(57) **Zusammenfassung**

Es ist eine Kabeldurchführung zum Durchführen von Kabeln durch ein Trennelement bereitgestellt, mit: einem Durchführungsgehäuse (2), welches einen Gehäuseinnenraum (7) aufweist, der von einer seitlichen Gehäusewand (8) und einem Gehäuseboden (9) mit einer Bodenöffnung (10) zum Durchführen mehrerer Kabel begrenzt ist; einem Teilungsbauteil (3), welches in dem Gehäuseinnenraum (7) dem Gehäuseboden (9) gegenüberliegend angeordnet ist und Aufnahmen (15) bereitstellt; und Dichtelementen (4), die jeweils in einer der Aufnahmen (15) angeordnet sind und einen Kabeldurchgang (19) aufweisen, der eingerichtet ist, ein Kabel dichtend aufzunehmen. Die Bodenöffnung (10) ist im Bereich des Gehäusebodens (9) zumindest abschnittsweise von einer am Durchführungsgehäuse (2) angeordneten Dichtung (9a) umgeben, an welcher die Dichtelemente (4), wenn diese in der Aufnahme (15) angeordnet sind, dichtend zur Anlage kommen. Weiterhin ist eine Anordnung mit einem Trennelement, einer Kabeldurchführung und Kabeln geschaffen. (Fig. 1)

## Beschreibung

Die Erfindung betrifft eine Kabeldurchführung zum Durchführen von Kabel durch ein Trennelement, beispielsweise eine Trenn- oder Gehäusewand sowie eine Anordnung.

### Hintergrund

Derartige Kabeldurchführungen werden genutzt, um in verschiedenen Anwendungen ein oder mehrere Kabel durch ein Trennelement hindurchzuführen, insbesondere eine Trennwand. Hierbei ist es häufig erforderlich, dass die Kabel gedichtet durch eine Öffnung in dem Trennelement hindurchgeführt werden, insbesondere um gegen Feuchtigkeits- oder Schmutzeintritt abgedichtet zu sein. Zum dichtenden Hindurchführen werden die Kabel in einem Durchgang eines zugeordneten Dichtelements angeordnet.

Aus dem Dokument DE 10 2013 110 545 A1 ist eine Kabeldurchführung zum Durchführen von Kabeln durch ein Trennelement bekannt. Die Kabeldurchführung weist ein Halteteil auf, welches ein Durchführungsgehäuse bereitstellt. Das Durchführungsgehäuse weist einen Boden und eine seitlich umlaufende Gehäusewand auf. Der Boden ist mit der seitlichen Gehäusewand einstückig ausgebildet. Im Boden sind Aufnahmen vorgesehen, in welche Dichtelemente eingesteckt sind, die einen jeweiligen Durchgang zum Aufnehmen eines Kabels bereitstellen. In dem Halteteil wird ein Führungsteil arretiert, welches mit Hilfe einer formschlüssigen Verbindung an dem Halteteil gesichert ist. Beim Montieren der Kabeldurchführung im Bereich einer Öffnung eines Trennelements wird in der Öffnung eine Tülle aus einem elastischen Material angeordnet, die einen Durchgang zum Aufnehmen eines Abschnitts des Führungsteils der Kabeldurchführung aufweist, in die dann das Führungsteil der Kabeldurchführung eingesteckt wird. Eine dem Trennelement zugewandte Stirnseite des Halteteils bildet einen Anschlag, der die beim Montieren der Kabeldurchführung gegen eine Stirnseite der Tülle zum Anschlag gebracht wird. Mittels der Tülle ist das Führungsteil der Kabeldurchführung dichtend in der Öffnung des Trennelements angeordnet und wird dort gehalten.

### Zusammenfassung

Aufgabe der Erfindung ist es, eine Kabeldurchführung zum Durchführen von Kabel durch ein Trennelement sowie eine Anordnung mit Kabeldurchführung anzugeben, welche eine flexible Anpassung der Kabeldurchführung an unterschiedliche Anwendungssituationen sowie eine sichere Montage der Kabeldurchführung an einem Trennelement gewährleistet.

Zur Lösung ist eine Kabeldurchführung zum Durchführen von Kabeln durch ein Trennelement nach dem unabhängigen Anspruch 1 geschaffen. Weiterhin ist eine Anordnung nach dem Anspruch 15 vorgesehen. Ausgestaltungen sind Gegenstand von abhängigen Unteransprüchen.

Nach einem Aspekt ist eine Kabeldurchführung zum Durchführen von Kabeln durch ein Trennelement geschaffen, welche mit einem Durchführungsgehäuse gebildet ist, das einen Gehäuseinnenraum aufweist, der von einer seitlichen Gehäusewand und einem Gehäuseboden mit einer Bodenöffnung zum Durchführen mehrerer Kabel begrenzt ist. Weiterhin sind ein Teilungsbauteil, welches in dem Gehäuseinnenraum dem Gehäuseboden gegenüberliegend angeordnet ist und Aufnahmen bereitstellt, sowie Dichtelemente vorgesehen, die jeweils in einer der Aufnahmen angeordnet sind und einen Kabeldurchgang aufweisen, der eingerichtet ist, ein Kabel dichtend aufzunehmen. Die Bodenöffnung im Bereich des Gehäusebodens ist zumindest abschnittsweise von einer am Durchführungsgehäuse angeordneten Dichtung umgeben, an welcher die Dichtelemente, wenn diese in der Aufnahme angeordnet sind, dichtend zur Anlage kommen.

Das Anordnen des Teilungsbauteils sowie der Dichtelemente in den Aufnahmen des Teilungsbauteils ermöglicht eine individuelle Anpassung der Kabeldurchführung an unterschiedliche Anwendungssituationen. Die Dichtelemente können an verschiedene Aufgaben individuell angepasst werden, um sie dann in den Aufnahmen zum Ausbilden der Kabeldurchführung anzuordnen. Die Dichtelemente können in Längsrichtung einen Trennschnitt aufweisen, der es ermöglicht, das Dichtelement im Bereich des Trennschnitts zu öffnen, um ein Kabel in dem im Dichtelement bereitgestellten Durchgang anzuordnen.

Die Kabeldurchführung kann weiterhin ein Einschraub- und Verriegelungsbauteil aufweisen, welches in Bezug auf das Durchführungsgehäuse einen proximalen Gewindeabschnitt und einen distalen Gewindeabschnitt aufweist. Der proximale Gewindeabschnitt ist hierbei in einen Innengewindeabschnitt des Durchführungsgehäuses eingeschraubt, derart, dass hierdurch das Teilungsbauteil und die Dichtelemente mittels des Einschraub- und Verriegelungsbauteils in dem Gehäuseinnenraum gesichert sind. Der distale Gewindeabschnitt ist dann eingerichtet, mit einem Verschraubungspartner eine Schraubverbindung zum Montieren des Durchführungsgehäuses im Bereich einer Öffnung eines Trennelements auszubilden.

Mit Hilfe der unter Verwendung des distalen Gewindeabschnitts auszubildenden Schraubverbindung kann die Kabeldurchführung sicher an dem Trennelement montiert werden, insbesondere auch in Anwendungsfällen, bei denen die Kabeldurchführung Vibrationen oder Schlägen im Betrieb ausgesetzt ist. Für derartige Anwendungen ist die Kabeldurchführung weiter dadurch optimiert, dass das Teilungsbauteil und die Dichtelemente nach dem Einschrauben des Einschraub- und Verriegelungsbauteils in das Durchführungsgehäuse hierin mittels des Einschraub- und Verriegelungsbauteils fixiert und gesichert, wobei vorgesehen sein kann, dass die Dichtelemente hierbei stirnseitig geklemmt sind.

Der Gehäuseinnenraum kann quer zur Längsrichtung der hindurchzuführenden Kabel einen mehreckigen Querschnitt aufweisen, beispielsweise einen viereckigen Querschnitt. Ähnlich können die Aufnahmen, die mittels des Teilungsbauteils bereitgestellt werden, einen eckigen Querschnitt aufweisen, in den sich die Dichtelemente formschlüssig einpassen.

Das Einschraub- und Verriegelungsbauteil kann mit einem einzelnen Durchbruch oder Durchgang gebildet sein, durch den hindurch die mehreren Kabel verlaufen. Alternativ können in dem Einschraub- und Verriegelungsbauteil mehrere Durchgänge bereitgestellt sein, die jeweils zur Aufnahme eines oder mehrerer Kabel dienen.

Der Gehäuseboden kann mit einem umlaufenden Rand gebildet sein, welcher die Öffnung für die Kabel umgibt. Gegen diesen kann das Teilungsbauteil zur Anlage kommen.

Die Kabeldurchführung kann insbesondere an einem als Trenn- oder Gehäusewand ausgeführten Trennelement montiert werden.

Die Dichtelemente können aus einem elastischen Material sein, und das Einschraub- und Verriegelungsbauteil kann in der eingeschraubten Stellung gegen die Dichtelemente drücken, so dass diese ein jeweiliges Kabel dichtend aufnehmen. Es kann vorgesehen sein, dass das Einschraub- und Verriegelungsbauteil in der eingeschraubten Stellung ausschließlich oder ergänzend gegen eine der Öffnung des Trennelements zugewandte Stirnseite (Fläche des Dichtelements, die einen Ausgang des Kabeldurchgangs umschließt) drückt. Mittels Drücken des Dichtelements aus elastischem Material wird eine Dichtung um das in das Dichtelement aufgenommene Kabel herum ausgebildet. Gleichzeitig wird das Dichtelement gegen die Aufnahme des Dichtelements umgebende Wandabschnitte gedrückt, so dass auch in diesen Bereichen eine Dichtwirkung ausgebildet wird. Alternativ oder ergänzend zum Drücken gegen die Stirnseite des Dichtelements kann vorgesehen sein, dass an dem Einschraub- und Verriegelungsbauteil Druckelemente gebildet sind, die beim Einschrauben schräg gegen Oberflächenabschnitte des Dichtelements drücken, zum Beispiel schräg gegen eine vorderseitige Kante.

Das Teilungsbauteil kann in dem Gehäuseinnenraum selbsthaltend angeordnet sein. Das Teilungsbauteil ist bei diesen oder anderen Ausführungsformen lösbar in dem Gehäuseinnenraum aufgenommen. Eine selbsthaltende Montage kann beispielsweise mittels Einklemmen oder Einklipsen des Teilungsbauteils in dem Gehäuseinnenraum erreicht werden. Im eingeschraubten Zustand sichert das Einschraub- und Verriegelungsbauteil dann das Teilungsbauteil zusätzlich in dem Gehäuseinnenraum, so dass beispielsweise eine Absicherung gegen ein Lösen aufgrund von Schwingungen oder Vibrationen der Kabeldurchführung im Betrieb ausgebildet ist.

Das Teilungsbauteil kann auf einer Innenseite des Durchführungsgehäuses in zugeordneten Führungen angeordnet sein. Die Führungen können mit Rillen, Nuten oder Vertiefungen gebildet sein, sei es im Bereich der seitlichen Gehäusewand und / oder des Gehäusebodens. Sind die zugeordneten Führungen (auch) im Bereich der seitlichen Gehäusewand ausgebildet, können diese dazu dienen, dass Teilungsbauteil beim Einführen von der dem Boden gegenüberliegenden stirnseitigen Öffnung des Durchführungsgehäuses zu führen, beispielsweise um ein möglichst einfaches Anordnen des Teilungsbauteils in der korrekten Montagelage zu unterstützen.

Der proximale und der distale Gewindeabschnitt können auf Bauteilabschnitten des Einschraub- und Verriegelungsbauteils ausgebildet sein, welche unterschiedliche Außendurchmesser aufweisen. Beispielsweise kann der Bauteilabschnitt mit dem proximalen Gewindeabschnitt einen kleineren Durchmesser als der Bauteilabschnitt mit dem distalen Gewindeabschnitt aufweisen. Alternativ können der distale und der proximale Gewindeabschnitt den gleichen Außendurchmesser aufweisen. Zwischen den beiden Gewindeabschnitten kann ein gewindefreier Abschnitt zum Trennen des distalen und des proximalen Gewindeabschnitts vorgesehen sein.

Das Einschraub- und Verriegelungsbauteil kann mehrteilig ausgeführt sein. Für das Einschraub- und Verriegelungsbauteil können lösbar miteinander verbundene Bauteilstücke vorgesehen sein, beispielsweise zwei Bauteilhälften, zum Beispiel in Form von Halbrohrabschnitten. Die Bauteilstücke können zur Montage zum Beispiel zusammengefügt werden, beispielsweise dadurch, dass an den Bauteilstücken ausgebildete Vorsprünge in zugeordnete Aufnahmen eingreifen. Es kann vorgesehen sein, dass die Bauteilstücke mittels Klemmen oder Klipsen verbunden werden. Das Einschraub- und Verriegelungsbauteil kann in Längsrichtung geteilt sein, was es ermöglicht, vor dem Zusammenführen der Bauteilstücke hierzwischen die hindurchzuführenden Kabel anzuordnen. Alternativ kann das Einschraub- und Verriegelungsbauteil einstückig ausgeführt sein. Alternativ kann das Einschraub- und Verriegelungsbauteil eintstückig oder einteilig ausgeführt sein.

An dem Bauteilabschnitt des Einschraub- und Verriegelungsbauteils, auf dem der proximale Gewindeabschnitt angeordnet ist, kann ein Anschlag für das Einführen des Einschraub- und Verriegelungsbauteils in der Öffnung des Trennelementes ausgebildet sein. Bei der Montage der Kabeldurchführung kann der Anschlag eine einer Oberfläche des Trennelements zum Anschlag kommen, beispielsweise auf einer äußeren Oberfläche einer Trennwand.

Das Durchführungsgehäuse kann auf einer Stirnseite, welche beim Montieren an dem Trennelement zur Anlage kommt, eine umlaufende Dichtung aufweisen. Die Dichtung kann aus einem elastischen Material sein. Es kann vorgesehen sein, dass die Dichtung einstückig an das Durchführungsgehäuse angeformt ist, beispielsweise mittels 2K-Spritzen. Alternativ kann vorgesehen sein, dass die Dichtung lösbar an dem Durchführungsgehäuse angeordnet ist, beispielsweise als abnehmbarer Dichtring.

Die Dichtung im Bereich des Gehäusebodens kann bei den verschiedenen Ausgestaltungen mit einem Steg oder einem Vorsprung (Dichtsteg oder Dichtvorsprung) gebildet sein. Die Dichtung kann an dem Durchführungsgehäuse einstückig angeformt sein, beispielsweise mittels 2K-Spritzen, zum Beispiel als Kunststoff-Weichkomponente, während das Durchführungsgehäuse aus einer Kunststoff-Hartkomponente ist. Auf diese Weise kann die Dichtung formschlüssig und unverlierbar an dem Durchführungsgehäuse angeordnet oder angeformt sein. Hierbei ist die Dichtung in dichtendem Kontakt mit einer rückseitigen und / oder einer seitlichen Oberfläche der Dichtelemente, wenn diese in eine zugeordnete Aufnahme eingeführt oder eingeschoben sind. Es kann vorgesehen sein, dass die Dichtung, welche den Gehäuseboden ganz oder teilweise umgreifend gebildet ist, einen Kantenbereich des Dichtelementes umgreift. Alternativ oder ergänzend kann vorgesehen sein, dass die Dichtung, zum Beispiel ein Dichtsteg, in einer Nut an dem in die Aufnahme eingebrachten Dichtelement liegt. Die Dichtung kann im Querschnitt eine L-Form aufweisen.

Die Dichtung kann in einem Beispiel gegenüber einer Innenwand, die in Kabeldurchführrichtung verläuft, vorstehen und so einen Anschlag für das in die zugeordnete Aufnahme einzuführende Dichtelement bilden.

Die mittels des Teilungsbauteils in dem Gehäuseinnenraum bereitgestellten Aufnahmen können konisch ausgebildet sein. Die Aufnahmen können sich in Richtung des Bodens des Durchführgehäuses hin verjüngen oder verkleinern. Zum formschlüssigen Einpassen der Dichtelemente können diese eine konisch ausgebildete Außenform aufweisen.

Die vorangehend in Verbindung mit der Kabeldurchführung beschriebenen Ausgestaltungen können im Zusammenhang mit der Anordnung entsprechend vorgesehen sein. Bei der Anordnung mit Trennelement und Kabeldurchführung kann vorgesehen sein, dass zum Ausbilden der Schraubverbindung der distale Gewindeabschnitt des Einschraub- und Verriegelungsbauteils der Kabeldurchführung mit einen Innengewinde im Bereich der Öffnung des Trennelements und / oder einem Befestigungsbauteil verschraubt ist. Weist die Öffnung des Trennelements, durch welches hindurch die Kabel geführt werden sollen, ein Innengewinde auf, kann der distale Gewindeabschnitt des Einschraub- und Verriegelungsbauteils zum Montieren eingeschraubt werden. Ergänzend oder alternativ kann vorgesehen sein, dass zum Befestigen der Kabeldurchführung im Bereich der Öffnung des Trennelements, beispielsweise einer Trennwand, auf dem distalen Gewindeabschnitt ein Befestigungsbauteil aufgeschraubt wird, nachdem der distale Gewindeabschnitt durch die Öffnung des Trennelements hindurchgesteckt wurde. Mit Hilfe des Befestigungsbauteils wird dann das Durchführungsgehäuse an dem Trennelement festgeschraubt, wobei eine Wandung des Trennelements zwischen dem Befestigungsbauteil und dem Durchführungsgehäuse mittels Verschrauben geklemmt wird. Das Befestigungsbauteil kann zum Beispiel eine Konter- oder Überwurfmutter sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung einer Anordnung für eine Kabeldurchführung zum Durchführen von Kabeln durch eine Trennelement im nichtmontierten Zustand;
- Fig. 2: eine Schnittdarstellung der Anordnung zum Durchführen von Kabeln durch ein Trennelement im montierten Zustand;
- Fig. 3: schematische perspektivische Darstellungen einer Kabeldurchführung im zusammengebauten Zustand;
- Fig. 4: schematische Darstellungen der Anordnung aus Fig. 3 von vorn und von hinten;
- Fig. 5: schematische perspektivische Darstellungen einer anderen Anordnung für eine Kabeldurchführung von schräg vorn und schräg hinten und
- Fig. 6: schematische perspektivische Darstellungen der anderen Anordnung für eine Kabeldurchführung aus Fig. 5 von vorn und im Schnitt.

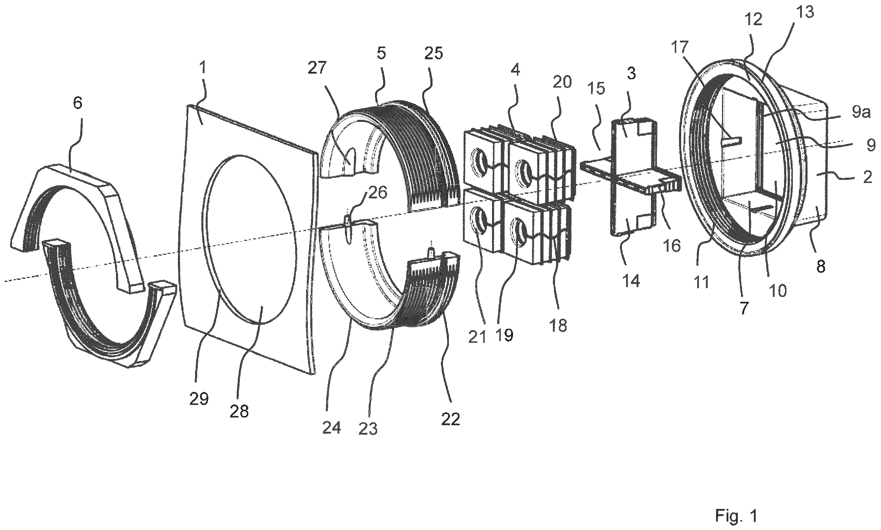

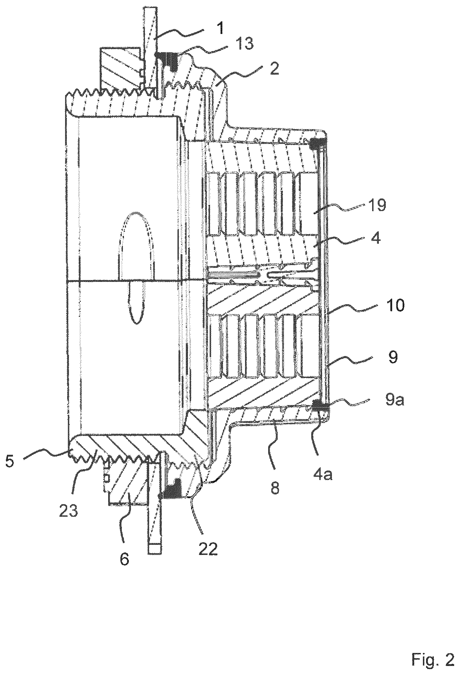

Fig. 1 zeigt eine schematische perspektivische Darstellung einer Anordnung für eine Kabeldurchführung zum Durchführen von Kabeln (nicht dargestellt) durch ein Trennelement 1, bei dem es sich beispielsweise um eine Trenn- oder eine Gehäusewand handeln kann, zum Beispiel eine Gehäusewand eines Schaltschranks oder eines elektrischen oder elektronischen Geräts. Für die Kabeldurchführung sind ein Durchführungsgehäuse 2, ein Teilungsbauteil 3, Dichtelemente 4 sowie ein Einschraub- und Verriegelungsbauteil 5 vorgesehen. Weiterhin ist in Fig. 1 ein Befestigungsbauteil 6 gezeigt, welches bei der gezeigten Ausführungsform vorgesehen ist, um die Kabeldurchführung an dem Trennelement 1 zu sichern, indem zwischen dem Befestigungsbauteil 6 und dem Einschraub- und Verriegelungsbauteil 5 eine Schraubverbindung ausgebildet wird (vgl. Fig. 2).

Das Durchführungsgehäuse 2 weist einen Gehäuseinnenraum 7 auf, der von einer seitlichen Gehäusewand 8 und einem Gehäuseboden 9 begrenzt ist. Im Bereich des Gehäusebodens 9 ist eine Bodenöffnung 10 ausgebildet, die im dargestellten Ausführungsbeispiel dem Gehäuseboden 9 zum großen Teil erfassend ausgeführt ist und zum Hindurchführen der Kabel (nicht dargestellt) dient. Um die Bodenöffnung 10 herum umlaufend ist eine Dichtung 9a angeordnet. Die Dichtung 9a ist im gezeigten Ausführungsbeispiel mit einem Steg (Dichtsteg) gebildet. Die Dichtung 9a ist an dem Durchführungsgehäuse 2 einstückig angeformt, beispielsweise mittels 2K-Spritzen. Alternativ kann vorgesehen sein, dass die Dichtung 9a lösbar an dem Durchführungsgehäuse 2 angeordnet ist, beispielsweise als abnehmbarer Dichtring oder -reifen. Im verbauten Zustand (vgl. Fig. 2 bis 4) der Dichtelemente 4 liegt Die Dichtung 9a an diese an und dichtet diese so seitlich entlang eines Abschnitts benachbart zu dem Durchführungsgehäuse 2 ab. Hierbei ist Die Dichtung 9a in dichtendem Kontakt mit einer rückseitigen Oberfläche 4a der Dichtelemente 4 (vgl. insbesondere Fig. 2). Es kann vorgesehen sein, dass die Dichtung 9a hierbei einen Kantenbereich des Dichtelements 4 umgreift. Alternativ oder ergänzend kann vorgesehen sein, dass die Dichtung 9a in einer Nut 4b an dem Dichtelement 4 liegt.

Das Durchführungsgehäuse 2 weist weiterhin ein Innengewinde 11 auf. Im Bereich einer stirnseitigen Oberfläche 12 ist eine umlaufende Dichtung 13 an dem Durchführungsgehäuse 2 vorgesehen.

Das Teilungsbauteil 3 weist sich kreuzende Teilungswände 14 auf, so dass Aufnahmen 15 bereitgestellt sind, in die dann, wenn das Teilungsbauteil 3 im Gehäuseinnenraum 7 des Durchführungsgehäuses 2 angeordnet ist, die Dichtelemente 4 eingeführt werden können (vgl. Fig. 2). Beim Einführen in dem Innenraum 7 des Durchführungsgehäuses 2 werden außen- oder randseitige Abschnitte 16 der Trennwände 14 in zugeordneten Führungen 17 im Gehäuseinnenraum 7 angeordnet. Das Teilungsbauteil 3 kann auf diese Weise selbsthaltend in dem Gehäuseinnenraum 7 angeordnet werden, zum Beispiel selbstklemmend. Im Bereich der randseitigen Abschnitte 16 kann eine oberflächenseitige Dichtung aus einem elastischen Material vorgesehen sein.

Bei der dargestellten Ausführungsform weisen die Dichtelemente 4 in Längsrichtung einen Trennschnitt 18 auf, durch den hindurch ein Kabel im Durchgang 19 des jeweiligen Dichtelements 4 eingebracht werden kann. Umlaufend weisen die Dichtelemente 4 mehrere Dichtlippen 20 auf. Vergleichbar sind im Durchgang 19 innere Dichtlippen 21 vorgesehen.

Das Einschraub- und Verriegelungsbauteil 5 verfügt über einen proximalen Gewindeabschnitt 22 sowie einen distalen Gewindeabschnitt 23, die bei der gezeigten Ausführungsform auf Bauteilabschnitten mit unterschiedlichem Durchmesser angeordnet sind. Bei dem dargestellten Ausführungsbeispiel ist das Einschraub- und Verriegelungsbauteil 5 mehrteilig mit zwei Bauteilhälften 24, 25 ausgebildet, die mittels Vorsprüngen 26 und zugeordneten Ausnehmungen 27 lösbar miteinander verbunden werden können, um dann den proximalen Gewindeabschnitt 22 in das Innengewinde 11 des Durchführungsgehäuses 2 einzuschrauben, so dass hierin das Teilungsbauteil 3 und die Dichtelemente 4 gesichert sind, insbesondere geklemmt, derart, dass eine diesen zugewandte stirnseitige Oberfläche des Einschraub- und Verriegelungsbauteils gegen Teilungsbauteil 3 und Dichtelemente 4 jeweils zur Anlage kommt.

Zum Montieren an dem Trennelement 1 im Bereich einer Öffnung 28 kann dann der distale Gewindeabschnitt 23 durch die Öffnung 28 teilweise hindurchgeführt werden, um das Befestigungsbauteil 6 aufzuschrauben. Eine derart ausgebildete Kabeldurchführung ist in Fig. 2 im Schnitt gezeigt. Alternativ oder ergänzend kann vorgesehen sein, dass entlang des umlaufenden Randes 29 der Öffnung 28 ein Innengewinde ausgebildet ist, in welches der distale Gewindeabschnitt 23 eingeschraubt wird.

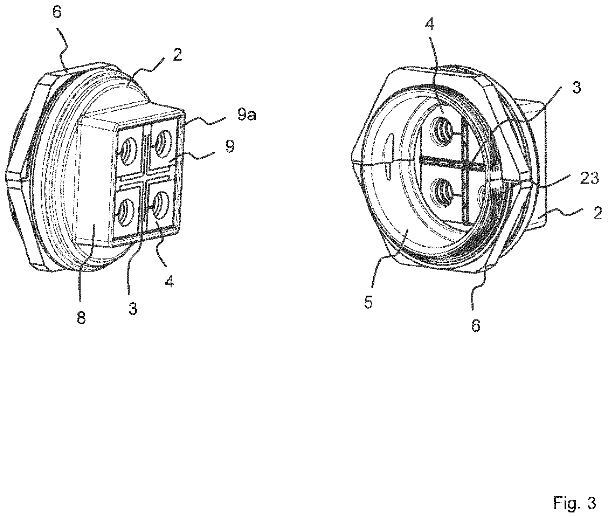

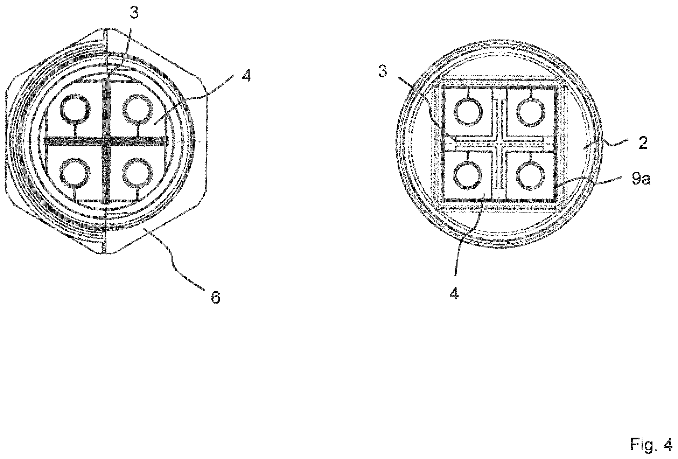

Die Fig. 3 und 4 zeigen schematische Darstellungen einer Anordnung, in welcher die Kabeldurchführung zusammengebaut ist, ohne an dem Trennelement 1 montiert zu sein. Für die gleichen Merkmale werden in den Fig. 3 und 4 dieselben Bezugszeihen wie in den Fig. 1 und 2 verwendet.

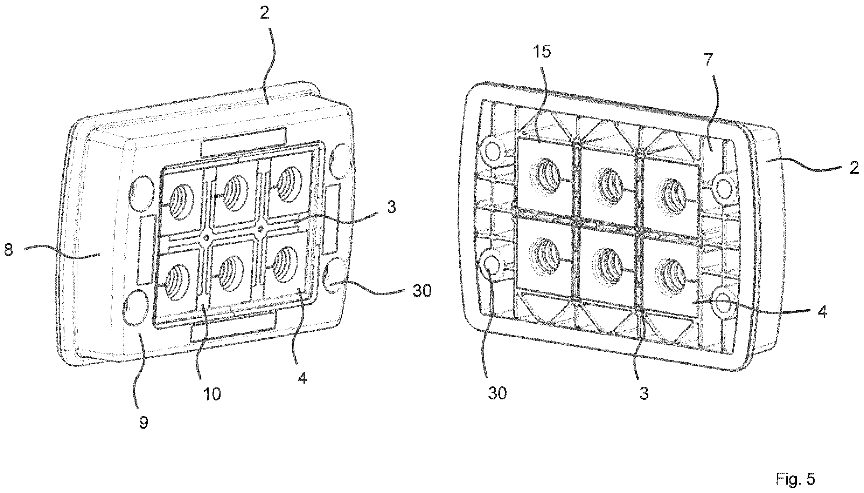

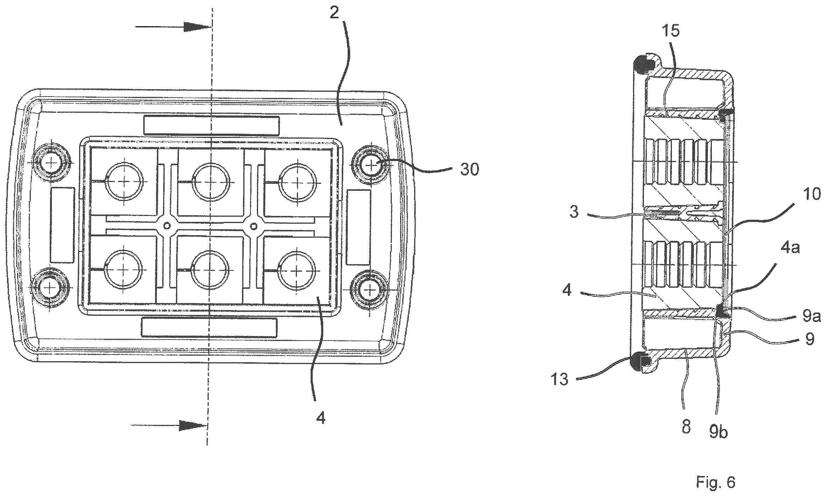

Fig. 5 und 6 zeigen schematische Darstellungen einer anderen Anordnung für eine Kabeldurchführung. Für gleiche Merkmale werden in den Fig. 5 und 6 dieselben Bezugszeichen wie bei der Ausführung in den Fig. 1 bis 4 verwendet.

Dichtelemente 4 sind in zugeordnete Aufnahmen 15 eingesteckt, welche im Durchführungsgehäuse 2 mittels des Teilungsbauteils 3 bereitgestellt sind.

Im Unterschied zum Ausführungsbeispiel in den Fig. 1 bis 4 mit dem Einschraub- und Verriegelungsbauteil 5 sind an dem Durchführungsgehäuse 2 Durchbrüche 30 vorgesehen, in die Schraubmittel (nicht dargestellt) einführbar sind, um das Durchführungsgehäuse 2 an einer zur Vereinfachung der Darstellung nicht gezeigten Trenn- oder Gehäusewand zu befestigen, derart, dass die umlaufende Dichtung 13 den Gehäuseinnenraum 7 abdichtet. Zur Abdichtung im Bereich der Bodenöffnung 10 ist die Dichtung 9a an dem Durchführungsgehäuse 2 angeordnet. Beim Anordnen in einer eingeführten Endstellung kommen die Dichtelemente 4 hieran zum Anschlag, so dass entlang des Umfangs der Bodenöffnung 10 umlaufend eine Dichtwirkung ausgebildet wird. Gemäß der Schnittdarstellung Fig. 6 liegt die Dichtung 9a mit einem vorspringenden Abschnitt 9b in einer zugeordneten Nut 4a am Dichtelement 4. Die Dichtung 9a weist, vergleichbar dem Beispiel in den Fig. 2, im Querschnitt eine L-Form auf, was wahlweise .

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Kabeldurchführung zum Durchführen von Kabeln durch ein Trennelement, mit:
- einem Durchführungsgehäuse (2), welches einen Gehäuseinnenraum (7) aufweist, der von einer seitlichen Gehäusewand (8) und einem Gehäuseboden (9) mit einer Bodenöffnung (10) zum Durchführen mehrerer Kabel begrenzt ist;
- einem Teilungsbauteil (3), welches in dem Gehäuseinnenraum (7) dem Gehäuseboden (9) gegenüberliegend angeordnet ist und Aufnahmen (15) bereitstellt; und
- Dichtelementen (4), die jeweils in einer der Aufnahmen (15) angeordnet sind und einen Kabeldurchgang (19) aufweisen, der eingerichtet ist, ein Kabel dichtend aufzunehmen;
wobei die Bodenöffnung (10) im Bereich des Gehäusebodens (9) zumindest abschnittsweise von einer am Durchführungsgehäuse (2) angeordneten Dichtung (9a) umgeben ist, an welcher die Dichtelemente (4), wenn diese in der Aufnahme (15) angeordnet sind, dichtend zur Anlage kommen.

2. Kabeldurchführung nach Anspruch 1, **dadurch gekennzeichnet, dass** die Dichtung (9a) im Bereich des Gehäusebodens (9) mit einem Steg oder einem Vorsprung gebildet ist.

3. Kabeldurchführung nach Anspruch 1 oder 2, **dadurch gekennzeichnet, dass** die Dichtung (9a) an dem Durchführungsgehäuse (2) einstückig angeformt ist.

4. Kabeldurchführung nach mindestens einem der vorangehenden Ansprüche, **dadurch gekennzeichnet, dass** die Dichtung (9a), welche den Gehäuseboden (9) ganz oder teilweise umgreifend gebildet ist, einen Kantenbereich des Dichtelementes (4) umgreift.

5. Kabeldurchführung nach mindestens einem der vorangehenden Ansprüche, **dadurch gekennzeichnet, dass** die Dichtung (9a) in einer Nut an dem in die Aufnahme eingebrachten Dichtelement (4) liegt.

6. Kabeldurchführung nach mindestens einem der vorangehenden Ansprüche, **dadurch gekennzeichnet, dass** die Dichtung (9a) gegenüber einer Innenwand, die in Kabeldurchführrichtung verläuft, vorsteht und so einen Anschlag für das in die zugeordnete Aufnahme (15) einzuführende Dichtelement (4) bildet.

7. Kabeldurchführung nach mindestens einem der vorangehenden Ansprüche, mit:
- einem Einschraub- und Verriegelungsbauteil (5), welches in Bezug auf das Durchführungsgehäuse (2) einen proximalen Gewindeabschnitt (22) und einen distalen Gewindeabschnitt (23) aufweist, wobei
- der proximale Gewindeabschnitt (22) in einen Innengewindeabschnitt (11) des Durchführungsgehäuses (2) eingeschraubt ist, derart, dass hierdurch das Teilungsbauteil (3) und die Dichtelemente (4) mittels des Einschraub- und Verriegelungsbauteils (5) in dem Gehäuseinnenraum (7) gesichert sind, und
- der distale Gewindeabschnitt (23) eingerichtet ist, mit einem Verschraubungspartner eine Schraubverbindung zum Montieren des Durchführungsgehäuses (2) im Bereich einer Öffnung (28) eines Trennelementes (1) auszubilden.

8. Kabeldurchführung nach Anspruch 7, **dadurch gekennzeichnet, dass** die Dichtelemente (4) aus einem elastischen Material sind und das Einschraub- und Verriegelungsbauteil (5) in der eingeschraubten Stellung gegen die Dichtelemente (4) drückt, so dass diese ein jeweiliges Kabel dichtend aufnehmen.

9. Kabeldurchführung nach mindestens einem der vorangehenden Ansprüche, **dadurch gekennzeichnet, dass** das Teilungsbauteil (3) in dem Gehäuseinnenraum (7) selbsthaltend angeordnet ist.

10. Kabeldurchführung nach mindestens einem der vorangehenden Ansprüche, **dadurch gekennzeichnet, dass** das Teilungsbauteil (3) auf einer Innenseite des Durchführungsgehäuses (2) in zugeordneten Führungen (17) angeordnet ist.

11. Kabeldurchführung nach mindestens einem der vorangehenden Ansprüche, soweit auf Anspruch 7 zurückbezogen, **dadurch gekennzeichnet, dass** der proximale und der distale Gewindeabschnitt (22,23) auf Bauteilabschnitten des Einschraub- und Verriegelungsbauteils (5) ausgebildet sind, welche unterschiedliche Außendurchmesser aufweisen.

12. Kabeldurchführung nach mindestens einem der vorangehenden Ansprüche, soweit auf Anspruch 7 zurückbezogen, **dadurch gekennzeichnet, dass** das Einschraub- und Verriegelungsbauteil (5) mehrteilig ausgeführt ist, und/oder, dass an dem Bauteilabschnitt des Einschraub- und Verriegelungsbauteils (5), auf dem das proximale Gewindeabschnitt (22) angeordnet ist, ein Anschlag für das Einführen des Einschraub- und Verriegelungsbauteils (5) in der Öffnung (28) des Trennelementes (1) ausgebildet ist.

13. Kabeldurchführung nach mindestens einem der vorangehenden Ansprüche, **dadurch gekennzeichnet, dass** das Durchführungsgehäuse (2) auf einer Stirnseite, welche beim Montieren an dem Trennelement (1) zur Anlage kommt, eine umlaufende Dichtung (13) aufweist.

14. Kabeldurchführung nach mindestens einem der vorangehenden Ansprüche, **dadurch gekennzeichnet, dass** die mittels des Teilungsbauteils (3) in dem Gehäuseinnenraum (7) bereitgestellten Aufnahmen (15) konisch ausgebildet sind.

15. Anordnung, mit
- einem Trennelement (1), welches eine Öffnung (28) aufweist;
- einer Kabeldurchführung nach mindestens einem der vorangehenden Ansprüche und
- Kabeln, die mittels der Kabeldurchführung durch die Öffnung (28) des Trennelements (1) gedichtet hindurchgeführt sind;
wobei die Kabeldurchführung mittels einer Schraubverbindung an dem Trennelement (1) montiert ist.
